# EUROPEAN PATENT SPECIFICATION

(11) **EP 0 420 598 B1**
(45) Date of publication and mention of the grant of the patent: **04.09.1996**
(21) Application number: 90310512.0
(22) Date of filing: 26.09.1990
(51) Int. Cl.: G02B 1/04, C08J 7/00, G02C 7/04

(54) **Contact lens based on a hydrophilic gel**
Kontaktlinse auf Basis eines hydrophilen Gels
Lentille de contact à base d'un gel hydrophile

(30) Priority: 26.09.1989 CS 5464/89
(43) Date of publication of application: 03.04.1991
(73) Proprietor: Academy of Sciences of the Czech Republic, 111 42 Praha Stare Mesto (CZ)
(72) Inventor: Cejkova, Jitka Czechoslovak Academy of Sciences, 111 42 Praha Stare Mesto (CS); Vacik, Jiri Czechoslovak Academy of Sciences, 111 42 Praha Stare Mesto (CS)
(74) Representative: Overbury, Richard Douglas

(56) References cited:
- EP-A- 0 219 207
- EP-A- 0 256 344
- EP-A- 0 384 666
- WO-A-80/02840
- FR-A- 2 548 673
- GB-A- 1 429 534

## Description

This invention relates to a contact lens formed from a hydrophilic gel containing a swelling agent.

It is required that contact lenses should interfere with the normal metabolism of the anterior eye segment and particularly with the metabolism of the cornea as little as possible. In this way it is possible to extend the time of their wearing without the danger of unfavourable consequences for the eye tissues. This is why there have been developed contact lenses formed from strongly swollen hydrophilic gels through which oxygen and low-molecular weight watersoluble metabolites diffuse relatively easily (British Patent No. 1,495,043). However, very soft contact lenses with a high content of water at the equilibrium swelling at 20°C (e.g. 60 to 85% of water) have a low strength and are easily damaged during handling. Refractive index also decreases rapidly with increasing content of water, so that lenses with higher dioptric values have to be thicker. In addition to this, the more water the lens contains, the more it dries and the more it absorbs water from the cornea at application, which may cause damage to the eye (e.g. change of refraction, curvature of cornea, and the like).

WO80/02840 discloses a contact lens incorporating an asepticizing agent which is bound to the polymeric material from which the lens is formed. The enzyme inhibitors quercetin and rutin are possible asepticizing agents.

EP-A-0219207 discloses a hydrophobic polymer system for the sustained release of an agent, e.g. a medicinal agent, which can be used in the form of a contact lens.

According to one aspect of the present invention there is provided a contact lens formed from a hydrophilic gel containing:
(a) in the equilibrium swollen state from 20 to 95 wt% of a swelling agent selected from the group consisting of physiological saline, water, or a buffer having a pH of 6.5 to 7.5; and
(b) an inhibitor of endoproteases and exoproteases selected from the group consisting of elastatinal, aprotinin and soyabean inhibitor of trypsin, wherein the inhibitor is present in an amount of from 0.1 to 20 mg per millilitre of swelling agent.

According to another aspect of the present invention there is provided a method of producing a contact lens which comprises immersing a body formed of a hydrophilic gel in a solution of a swelling agent containing an inhibitor of endoproteases and exoproteases and optionally an antiphlogistic and/or an antibiotic.

In accordance with a preferred embodiment the buffer is an ionically balanced phosphate or borax buffer .

1 mg of aprotinin contains approx. 5,000 TIU (trypsine inhibiting units).

The inhibitors of endo- and exoproteases present in the contact lens are released from the lens after application. The incorporation of the inhibitors into the lens may be carried out by:
a) conditioning the contact lens in the xerogel state in a solution of the inhibitor,
b) drying the commercially produced hydrophilic contact lens and conditioning it in a solution of the inhibitor, or
c) polymerization incorporation.

The conditioning of the contact lens in a solution of inhibitor is advantageously repeated several times in order to achieve a concentration of inhibitor in the lens which is about the same as the concentration of inhibitor in the solution. The drying of the contact lens, as mentioned in (b) above may be advantageously carried out by the method described in Czechoslovak Patent No. 254,382 (British Patent No. 2,180,243).

The incorporation of the inhibitors into the structure of the contact lens by polymerization can be carried out, provided that the inhibitors are soluble in the monomer mixture, by low-temperature polymerization (below 50°C) or by polymerization using UV radiation. These initiation systems are chosen to avoid denaturation of the inhibitors which might occur if high-temperature initiation systems were used.

It has been found that the first symptoms of incompatibility of a contact lens with the eye are accompanied by the occurrence of plasmin and other serin proteases in tears and later also on the surface of the cornea and conjunctiva. Further changes in the eye are caused by the increased amount of destructive enzymes, above all the proteolytic enzymes, in tears and eye tissues which locally causes degenerative processes.

The inhibitors of endo- and exoproteases, which are present in the contact lens according to the invention and which are released from the lens during application, inhibit plasmin and other destructive enzymes and thus increase the compatibility of the contact lens and extend the time for which it can be worn. The period of extended wearing also depends on the degree of contact lens hydration and the thickness.

In order to maintain an efficient concentration of inhibitors in the contact lens, it is useful to keep the lens in physiological saline, buffer with pH 6.5 to 7.5 e.g. an ionically balanced phosphate or borax buffer, or in water containing the inhibitors in the given amount.

The contact lens according to the invention may further advantageously contain steroidal antiphlogistics, for example, dexamethasone, in, for example an amount of from 0.05 to 1.5 wt% and /or nonsteroidal antiphlogistics, for example, indomethacin, in, for example, amounts of from 0.05 to 5 wt% and, if desired, also antibiotics sensitive to microbes, for example, chloramphenicol, neomycin, tetracycline, and the like in, for example, an amount of from 0.2 to 1 wt % (based on the swelling agent).

The antibiotics and antiphlogistics can be introduced into the contact lens dissolved in the swelling agent, together with the inhibitors, advantageously by one of the above given methods.

The antiphlogistics and antibiotics are released from the contact lens into the eye gradually, depending on their molecular weight, over 12 to 24 hours. After this time elapses, the contact lens can be inserted into the solution mentioned above, advantageously for 10 to 14 hours, and again applied.

The combination of proteolytic inhibitors with antiphlogistics and, if desired, with antibiotics leads to expressively enhanced antiexudation, antiinflammatory, and antimicrobial effect and a reduced time of treatment at lower concentrations of antiphlogistics and antibiotics.

The contact lens according to the invention is not liable to the deposition of mucus and other deposits and the eye with the lens applied tends to be free of pathogenic microbes.

The contact lens according to the invention can be used particularly for extended wearing. It may, however, also be successfully used for the treatment of various lesions of the anterior segment of the eye both by application of the contact lens as such or by the instillation of therapeutic solutions through the contact lens.

The following Examples illustrate the invention.

The materials, from which the contact lenses mentioned in the Examples are made, are as follows:-
- Polymacon =: crosslinked poly(2-hydroxyethyl methacrylate)
- Vifilcon =: crosslinked copolymer of 2-hydroxyethyl methacrylate with vinylpyrrolidone and methacrylic acid
- Deltafilcon =: crosslinked copolymer of 2-hydroxyethyl methacrylate with methyl methacrylate
- Ocufilcon =: crosslinked copolymer of 2-hydroxyethyl methacrylate with methacrylic acid
- Hefilcon =: crosslinked copolymer of 2-hydroxyethyl methacrylate with N-vinylpyrrolidone

### Example 1

A contact lens based on poly(2-hydroxyethyl methacrylate), with an equilibrium content of water after swelling of 38 wt.-% and a central thickness 0.08 mm, was prepared by turning a xerogel block. It was then immersed for 24 hours in a solution containing:
aprotinin 0.01 g
ionically balanced borax buffer (pH 7.4) up to 100 g.

The solution was changed twice. The continuous wearing period of the contact lens was extended by 100%.

### Example 2

A Polymacon contact lens (Allergan Optical) in the xerogel state (35 wt.-% of equilibrium water; central thickness 0.18 mm) was immersed at ambient temperature for 24 hours in a solution containing:
aprotinin 0.005 g
ionically balanced phosphate buffer (pH 7.4) up to 100 g.

The solution was changed twice. The contact lens was originally devised for short-time wearing (6 hours). However the presence of the aprotinin enabled the period of wearing to be extended to 12 hours.

### Example 3

Several contact lenses in the xerogel state with different contents of equilibrium water after swelling and central thicknesses of 0.12 to 0.20 mm, were dipped for 24 hours into a solution containing:
aprotinin 1 g
physiological saline up to 100 g.

The lenses used were produced by CIBA Vision Co. under the name Cibasoft (35 wt.-% of equilibrium water), AOSOFT (Vifilcon A; 55 wt.-% of equilibrium water), and SOFTCON Aphacic (Vifilcon A; 55 wt.-% of equilibrium water). The solution was changed twice. The wearing periods of the contact lenses were extended by 150%. The contact lenses could also be worn for extended periods by patients suffering from allergic conjunctivitis. The objective and subjective symptoms rapidly receded after application of the contact lens.

### Example 4

A contact lens in the xerogel state produced by Coast Vision (55 wt.-% of equilibrium water) was dipped for 24 hours into a solution containing:
aprotinin 2 g
ionically balanced phosphate buffer (pH 7.4) up to 100 g.
This treatment extended the period of continuous wearing by 1 week. The lens was very successfully used in the treatment of scleritis and episcleritis. Healing occurred within 10 days.

The lens was further used for the treatment of cornea burned with alkali and acid. The subjective symptoms were relieved on application of the contact lens and healing occurred within a week when burning had been caused by a low-concentrated substance. Transparency of the cornea completely recovered. In the case where burning etching had been caused by higher concentrated solutions, the cornea healed with a scar (breakdown of the cornea occurred in no case) and transparency of the cornea was partly restored.

### Example 5

A contact lens in the xerogel state made by Contact Lens Co. (Deltafilcon; 43 wt.-% of equilibrium water) was dipped for 24 hours into a solution containing:
aprotinin 0.001 g
physiological saline up to 100 g.
The contact lens was capable of repeated short-term wearing (6 to 12 hours) without any subjective or objective symptoms.

### Example 6

A contact lens commercially made by Coopervision (Polymacon; 38 wt.-% of equilibrium water; central thickness 0.15 mm) was dried for 24 hours at ambient temperature and then immersed for 12 hours in a solution containing:
aprotinin 0.1g
physiological saline up to 100 g
The wearing period of the contact lens was extended by 150%. The lens was also used with great success for the treatment of non-healing erosions of the cornea. The lesions healed within 6 days after application of the lens.

### Example 7

A contact lens commercially produced by COOPERTHIN (Polymacon; 38 wt.-% of equilibrium water) was dried at ambient temperature for 24 hours and then dipped for 12 hours into a solution containing:
aprotinin 2 g
ionically balanced borax buffer up to 100 g.
The short term wearing period of the contact lens was extended from 6 to 24 hours. The lens was also used for the treatment of xerosis and keratosis of various origins. After application of the lens, healing with normal epithelium occurred within 6 weeks.

### Example 8

A contact lens commercially made by Firestone Optics (55 wt.-% of equilibrium water) was dried at ambient temperature for 24 hours and then dipped for 12 hours into a solution containing:
aprotinin 0.05 g
physiological saline up to 100 g
The contact lens had its wearing period extended by 100% in a cosmetic application. It was used in the therapy of bullous keratopathy where it substantially eased the subjective symptoms. A substantial improvement also occurred when the lens was used in the treatment of dry eyes.

### Example 9

A contact lens commercially made by Flexiens, Inc. (Hefilcon A; 45 wt.-% of equilibrium water) was dried at ambient temperature for 24 hours and then dipped into a solution containing:
aprotinin 0.1 g
elastatinal 0.01 g
physiological saline up to 100 g.
The contact lens was applied to eyes suffering from epithelial defects. The corneae healed within a week. The lens was also used in the treatment of small perforations of the cornea which rapidly healed after application. The lenses healed eyes burned with weak acids and alkalies within 5 days. Transparency of the corneae recovered.

### Example 10

A contact lens commercially made by Metro Optics, Inc. (Polymacon; 38 wt.-% of equilibrium water) was dried at ambient temperature for 24 hours and then dipped for 12 hours into a solution containing:
aprotinin 0.5 g
elastatinal 0.2 g
soyabean 0.1g
physiological saline up to 100 g.
The contact lens had its wearing period extended by 100%. It was also used for therapeutic purposes and was very effective in the treatment of eyes burned with concentrated acids and alkalies. The inflammation of the eye receded and the frequency of corneal destruction was substantially reduced. The injury healed with a scar within a month and, in some cases, the transparency of the cornea recovered completely or at least in the peripheral region.

### Example 11

A contact lens from the firm Lombart Lenbart Lenses (Deltafilcon B; 43 wt.-% of equilibrium water) was dried at ambient temperature and immersed for 12 hours in a solution containing:
aprotinin 0.2 g
dexamethasone sodium phosphate 0.1 g
physiological saline up to 100 g.
The contact lens could be worn even in cases where vascularization of the cornea had already been found in a preceding period of wearing. The lens prepared in this way inhibited the vascularization. The contact lens was also successfully used in the treatment of corneal infiltrates where healing occurred within 10 days.

### Example 12

A contact lens of the firm Metro Optics (55 wt.-% of equilibrium water) was dried at ambient temperature for 24 hours and dipped into a solution containing:
aprotinin 0.01 g
elastatinal 0.1 g
dexamethasone sodium phosphate 0.1 g
chloramphenicol 0.5 g
physiological saline up to 100 g.
After application of the lens to eyes including non-healing corneal ulcers, healing occurred within 3 to 5 days.

### Example 13

A contact lens of the firm Ocu-Ease Optical (Ocufilcon; 53 wt.-% of equilibrium water) was dried for 24 hours and then dipped for 24 hours into a solution containing:
aprotinin 0.02 g
flurbiprofen 0.2 g
physiological saline up to 100 g.
The wearing period of the contact lens was extended by 100%. Vascularization of the cornea did not occur. The contact lens was also applied with success in the treatment of corneal vascularization developed in a preceding period of wearing. A very fast inhibition of vascularization took place after application of lenses prepared in this way.

### Example 14

A contact lens produced by Optical Plastics Research (Ocufilcon C; 55 wt.-% of equilibrium water) was dried for 24 hours at ambient temperature and dipped into a solution containing:
aprotinin 1 g
flurbiprofen 0.1 g
elastatinal 0.01 g
chloramphenicol 0.3 g
physiological saline up to 100 g.
The contact lens was used in the treatment of both superficial and deep corneal infiltrates. Healing occurred within 1 to 2 weeks. In cases complicated with secondary iritis, the symptoms substantially eased after application of the lens.

### Example 15

A contact lens of the firm Pearle Vision (55 wt.-% of equilibrium water) was dried at ambient temperature and then dipped for 24 hours into a solution containing:
aprotinin 0.02 g
elastatinal 0.01 g
soyabean 0.06 g
dexamethasone sodium phosphate 0.15 g
ionically balanced phosphate buffer (pH 7.4) up to 100 g.
The contact lenses healed inflammatory processes of cornea with stromal infiltrates.

### Example 16

A contact lens made by the firm Omega Optical (Polymacon; 38 wt.-% of equilibrium water) was dried to a xerogel state and swelled for 24 hours in a solution containing:
aprotinin 1 g
elastatinal 0.1 g
flurbiprofen 0.1 g
dexamethasone sodium phosphate 0.1 g
neomycin sulfate 0.3 g
physiological saline up to 100 g.
The contact lens was used for the treatment of non-healing erosions of the cornea. Re-epithelization increased within a week of application. Exceptional results were attained after severe etching and burning of the anterior segment of the eye. Intraocular inflammation did not develop. The cornea did not exhibit ulcerization and healed with a scar within a month. The transparency recovered in the periphery of the cornea.

### Example 17

A contact lens made by the firm Salvatori Ophthalmics (Polymacon; 38 wt.-% of equilibrium water) in a xerogel state was swelled for 24 hours in a solution containing:
aprotinin 1 g
pirprofen 0.2 g
neomycin sulfate 0.3 g
physiological saline up to 100 g.
The contact lens enabled the treatment of corneal infiltrates complicated by iritis and iridocyclitis. The inflammatory symptoms receded within 3 weeks.

### Example 18

A contact lens, made by the firm Sofsite, in a xerogel state, was swelled for 24 hours in a solution containing:
elastatinal 0.1 g
aprotinin 0.1 g
dexamethasone sodium phosphate 0.15 g
flurbiprofen 0.1 g
chloramphenicol 0.2 g
physiological saline up to 100 g.
The contact lens was used for the treatment of corneae burned with alkalis and lime. Healing ad integrum occurred in some cases; in more severe cases, where usually the cornea had broken down, the tissue healed with a scar after application of these lenses. In other cases, the contact lens proved very efficient for healing corneal ulcers.

### Example 19

A contact lens commercially produced by CIBA Vision Co. under the name Cibasoft (37.5 wt.-% of equilibrium water) was dried at ambient temperature for 24 hours and then immersed for 24 hours in a solution containing:
aprotinin 0.5 g
tetracycline 0.3 g
elastatinal 0.2 g
physiological saline up to 100 g.
The contact lens was used in the treatment of bacterial keratitis. The corneae, afflicted by infection with Staphylococcus pyogenes aureus and Streptococcus beta haemolyticus, healed within 10 days.

### Example 20

A contact lens commercially produced by CIBA Vision Co. under the name AOSOFT (Vifilcon A; 55 wt.-% of equilibrium water) was dried at ambient temperature for 24 hours and then dipped for 24 hours into a solution containing:
aprotinin 0.1 g
bacitracin 10,000 units
diclofenac 0.5 g
physiological saline up to 100 g.
The contact lens healed corneae afflicted by infection with Pseudomonas aeruginose within 10 days.

## Claims

1. A contact lens formed from a hydrophilic gel containing:
(a) in the equilibrium swollen state from 20 to 95 wt% of a swelling agent selected from the group consisting of physiological saline, water, or a buffer having a pH of 6.5 to 7.5; and
(b) an inhibitor of endoproteases and exoproteases selected from the group consisting of elastatinal, aprotinin and soyabean inhibitor of trypsin, wherein the inhibitor is present in an amount of from 0.1 to 20 mg per millilitre of swelling agent.

2. A contact lens according to claim 1, which additionally includes an antiphlogistic.

3. A contact lens according to claim 2, which contains from 0.05 to 1.5 wt % of a steroidal antiphlogistic and/or from 0.05 to 5 wt % of a nonsteroidal antiphlogistic.

4. A contact lens according to claim 2 or 3, wherein the antiphlogistic is dexamethasone or indomethacin.

5. A contact lens according to any preceding claim, which additionally includes an antibiotic sensitive to microbes.

6. A contact lens according to claim 5, wherein the antibiotic is present in an amount of from 0.2 to 1 wt %.

7. A contact lens according to claim 5 or 6, wherein the antibiotic is chloramphenicol, neomycin or tetracycline.

8. A contact lens according to any preceding claim, wherein the hydrophilic gel is selected from the group consisting of crosslinked polymers and copolymers of 2-hydroxyethyl methacrylate.

9. A method of producing a contact lens which comprises immersing a body formed of a hydrophilic gel in a solution of a swelling agent containing an inhibitor of endoproteases and exoproteases and optionally an antiphlogistic and/or an antibiotic.

## Patentansprüche

1. Kontaktlinse aus einem hydrophilen Gel, die enthält :
(a) in bis zu Gleichgewicht gequollenen Zustand 20 bis 95 Gew.% eines Quellungsmittels, das ausgewählt ist unter physiologischer Kochsalzlösung, Wasser und Pufferlösungen mit einem pH-Wert von 6,5 bis 7,5 und
(b) einen Endoproteasen- und Exoproteaseninhibitor, der unter Elastatinal, Aprotinin und dem Sojabohnen-Trypsininhibitor ausgewählt ist, wobei der Trypsininhibitor in einer Menge von 0,1 bis 20 mg pro Milliliter des Quellungsmittels vorliegt.

2. Kontaktlinse nach Anspruch 1, die ferner noch ein Antiphlogistikum enthält.

3. Kontaktlinse nach Anspruch 2, die 0,05 bis 5 Gew. % eines Steroid-Antiphlogistikums und/oder 0,05 bis 5 Gew. % eines Nichtsteroid-Antiphlogistikums enthält.

4. Kontaktlinse nach Anspruch 2 oder 3, wobei das Antiphlogistikum Dexamethason oder Indomethacin ist.

5. Kontaktlinse nach einem der vorangehenden Ansprüche, die ferner noch ein Antibiotikum enthält, das gegen Mikroben wirksam ist.

6. Kontaktlinse nach Anspruch 5, wobei das Antibiotikum in einer Menge von 0,2 bis 1 Gew.-% vorliegt.

7. Kontaktlinse nach Anspruch 5 oder 6, wobei das Antibiotikum Chloramphenikol, Neomycin und Teträzyklin ist.

8. Kontaktlinse nach einem der vorhergehenden Ansprüche, wobei das hydrophile Gel unter vernetzten Polymeren und Copolymeren von 2-Hydroxyethylmethacrylat ausgewählt ist.

9. Verfahren zur Herstellung von Kontaktlinsen, bei dem ein aus einem hydrophilen Gel hergestellter Formkörper in eine Lösung eines Quellungsmittels, die einen Endoproteasen- und Exoproteaseninhibitor und gegebenenfalls ein Antiphlogistikum und/oder ein Antibiotikum enthält, eingetaucht wird.

## Revendications

1. Une lentille souple formée d'un gel hydrophile qui contient:
(a) à l'état d'équilibre gonflé de 20 à 95 pour cent de l'agent de gonflage choisi du groupe qui comprend la solution physiologique, l'eau ou le tampon de pH de 6.5 à 7.5; et
(b) un inhibiteur d'endoprotéases et d'exoprotéases choisi d'un groupe qui comprend l'elastatinal, l'aprotinine et l'inhibiteur de la trypsine des graines de soya, l'inhibiteur étant présent dans une quantité de 0.1 à 20 mg per mililitre de l'agent de gonflage.

2. Une lentille souple d'après la revendication 1 qui contient encore un agent anti-inflammatoire.

3. Une lentille souple d'après la revendication 2 qui contient de 0.05 à 1.5 pour cent en poids de l'anti-inflammatoire stéroidique et/ou de 0.05 à 5 pour cent en poids de l'anti-inflammatoire non-steroidique.

4. Une lentille souple d'après la revendication 2 ou 3, quand l'anti-inflammatoire est le dexaméthasone ou l'indométhacine.

5. Une lentille souple d'après n'importe quelle des revendications précédentes qui contient encore un antibiotique sensible aux microbes.

6. Une lentille souple d'après la revendication 5, quand l'antibiotique est présent dans une quantité de 0.2 à 1 pour cent en poids.

7. Une lentille souple d'après la revendication 5 ou 6, quand l'antibiotique est le chloramphénicol; le néomycine ou le tétracycline.

8. Une lentille souple d'aprés n'importe quelle des revendications précédentes, quand le gel hydrophile est choisi d'un groupe comprenant les polymères réticulés et les copolymères du méthacrylate de 2-hydroxyéthyle.

9. Une méthode de la production d'une lentille souple qui comprend le plongement d'un corps formé d'un gel hydrophile dans une solution de l'agent de gonflage contenant un inhibiteur d'endoprotéases et d'exoprotéases et au choix un anti-inflammatoire et/ou un antibiotique.
